# FASCICULE DE BREVET EUROPEEN

(11) **EP 1 109 697 B1**
(45) Date de publication et mention de la délivrance du brevet: **09.06.2004**
(21) Numéro de dépôt: 99941688.6
(22) Date de dépôt: 03.09.1999
(51) Int. Cl.: B60N 2/42

(54) **Siège pour véhicule automobile comportant une partie en mousse d'aluminium de contrôle de la décélération du bassin d'un occupant**
Kraftfahrzeugsitz mit einem der Verzögerung des Beckens eines Insassen kontrollierenden Teil aus Aluminiumsschaum
Motor Vehicle Seat Comprising a Part Made of Aluminium Foam Controlling the Deceleration of a Passenger's Pelvis

(30) Priorité: 04.09.1998 FR 9811090
(43) Date de publication de la demande: 27.06.2001
(73) Titulaire: Renault s.a.s., 92100 Boulogne Billancourt (FR)
(72) Inventeur: ALLERA, Rodolphe, F-91770 Saint Vrain (FR); LAPORTE, Alain, F-78288 Guyancourt (FR); LECROSNIER, Laurent, F-78289 Guyancourt (FR)
(86) Numéro de dépôt international: PCT/FR1999/002105
(87) Numéro de publication internationale: WO 2000/013934

(56) Documents cités:
- DE-A- 4 230 670
- DE-A- 19 541 999
- DE-A- 19 702 995
- GB-A- 1 348 873
- US-A- 4 623 192

## Description

La présente invention concerne d'une manière générale un siège pour véhicule automobile, en particulier un siège équipé d'une ceinture de sécurité, dont l'assise comporte une partie de contrôle de la décélération du bassin de l'occupant lors d'un choc, en particulier d'un choc frontal du véhicule.

L'amélioration de la sécurité des occupants d'un véhicule automobile, en particulier lors de chocs, est devenue une préoccupation constante des constructeurs d'automobiles.

Ainsi, l'emploi de sièges équipés de sangles de ceintures de sécurité évite une projection vers l'avant de l'occupant lors d'un choc du véhicule, en particulier lors d'un choc frontal.

Néanmoins, lors d'un choc du véhicule, en particulier frontal, dû à la présence de la sangle de ceinture de sécurité, l'effort de traction vers l'avant exercé sur la sangle consécutif à la décélération brutale du véhicule est en partie transformé en un effort tendant à faire glisser l'occupant vers l'avant le long du siège.

Pour empêcher ce mouvement vers l'avant (sousmarinage) de l'occupant, on a proposé de placer transversalement dans la partie avant légèrement surélevée de l'assise du siège un élément cylindrique creux en métal recouvert d'une couche de matériau formant coussin. Une telle solution est décrite dans le document GB-1 348 873. Toutefois, cette solution présente l'inconvénient que l'élément métallique transversal est, lors d'un choc, déformé de façon permanente et peut exercer sur le bassin de l'occupant un effort de compression important pouvant entraîner des lésions.

Le document US-A-4 623 192 propose, pour éviter le sousmarinage, d'inclure dans la partie avant de l'assise du siège un élément qui, en cas de choc, est poussé vers le haut par l'intermédiaire d'un mécanisme relié au point d'ancrage sur le siège de la sangle de ceinture de sécurité, ce qui limite le mouvement vers l'avant du bassin de l'occupant. Cet élément mobile peut être fait d'un matériau semblable à celui du reste des coussins du siège en un matériau ayant une résistance relativement élevée à la compression. Outre le fait de sa complexité, de la nécessité d'un ancrage de la sangle de ceinture de sécurité sur le siège, ce dispositif présente comme précédemment l'inconvénient d'exercer sur le bassin de l'occupant un effort de compression important.

Le document DE-A-4230670 décrit un siège qui comporte une épaisseur ayant des caractéristiques d'absorption de chocs. L'absorbeur de choc étant en partie constitué d'aluminium.

Il apparaît donc souhaitable de mettre au point un siège de véhicule automobile qui, tout en évitant le glissement vers l'avant le long du siège (sousmarinage) de l'occupant, permettrait de contrôler la décélération du bassin de celui-ci lors d'un choc du véhicule, en particulier frontal.

On a maintenant trouvé, qu'en utilisant une mousse d'aluminium, il était possible de réaliser dans l'assise d'un siège de véhicule une partie qui à la fois limite le glissement de l'occupant vers l'avant le long du siège et contrôle la décélération du bassin de celui-ci en cas de choc, en particulier frontal.

Selon l'invention, on réalise un siège de véhicule automobile comprenant une assise et un dossier, caractérisé en ce que l'assise comporte au moins une partie de contrôle de la décélération du bassin d'un occupant assis sur le siège qui est constituée d'un élément en mousse d'aluminium.

L'élément en mousse d'aluminium constituant la partie de contrôle de la décélération du bassin peut être un élément rapporté ou bien faire partie. intégrante de la structure de l'assise du siège. En particulier, l'élément en mousse d'aluminium peut être un élément rapporté enfoui dans l'assise du siège à l'emplacement approprié ou être formé d'une seule et même pièce entièrement moulée avec le cadre de l'assise.

Bien évidemment, l'élément en mousse d'aluminium est réalisé aux formes et dimensions voulues pour jouer son rôle de partie de contrôle de la décélération du bassin en cas de choc du véhicule. Ainsi, l'épaisseur de l'élément en mousse d'aluminium sera généralement de 50 à 100 mm, de préférence de 80 à 100 mm. Bien évidemment, l'élément en mousse d'aluminium constituant la partie de contrôle de la décélération du bassin doit être situé dans l'assise du siège de manière que l'effort exercé par le bassin de l'occupant lors d'un choc soit appliqué sur cet élément en mousse d'aluminium.

Les mousses d'aluminium sont des produits connus et disponibles dans le commerce.

De manière générale, ces mousses sont constituées d'un alliage d'aluminium tel que AlSi₉Cu₃ ou AlSi₁₀Mg et de carbure de silicium (SiC) et sont des produits ayant des densités variant de 0,10 à 0,40.

Les mousses d'aluminium préférées selon l'invention ont une densité de 0,10 à 0,30 et mieux de 0,15 à 0,20.

Les mousses d'aluminium convenant pour la présente invention présentent en général un effort stabilisé inférieur à 10 kN pour un taux de déformation compris entre 50 et 95%, de préférence 55 à 95%, plus généralement de 70 à 85%.

En outre, les mousses d'aluminium sont des matériaux légers (environ 250 g/l selon la densité) et sont isotropes, c'est-à-dire présentent le même comportement quelle que soit la direction de l'effort appliqué.

L'élément en mousse d'aluminium constituant la partie de contrôle de la décélération du bassin peut comporter une peau sur les surfaces perpendiculaires à l'effort appliqué, en particulier pour les éléments en mousse d'aluminium de faible densité, ce qui permet d'obtenir un plateau d'effort plus constant.

A titre d'exemple de mousses d'aluminium convenant pour la présente invention, on peut citer des mousses commercialisées par la Société ALCAN (mousse nuance AA 359 + SiC) de densité variant de 0,10 à 0,35 et par la Société HYDROALUMINIUM, nuance AlSi₉Cu₃ + SiC de densité 0,20 à 0,40 et AlSi₁₀Mg + SiC de densité 0,20 à 0,30.

La suite de la description se réfère aux figures annexées qui représentent, respectivement :
Figure 1 - une vue schématique d'un siège de véhicule automobile dont l'assise comporte une partie de contrôle de la décélération du bassin de l'occupant constituée par un élément en mousse d'aluminium selon l'invention;
Figure 2 -. une vue en perspective d'un élément en mousse d'aluminium selon l'invention, sous la forme d'un élément rapporté;
Figure 3 - un graphe effort/déformation pour des blocs de mousse d'aluminium d'épaisseur 90-100 mm;
Figure 4 - un graphe énergie absorbée/déformation pour les mêmes blocs de mousse que pour la figure 3;
Figure 5 - un graphe effort/déformation pour des blocs de mousse d'aluminium d'épaisseur 50 mm; et
Figure 6 - un graphe énergie absorbée/déformation pour les mêmes blocs de mousse d'aluminium que pour la figure 5.

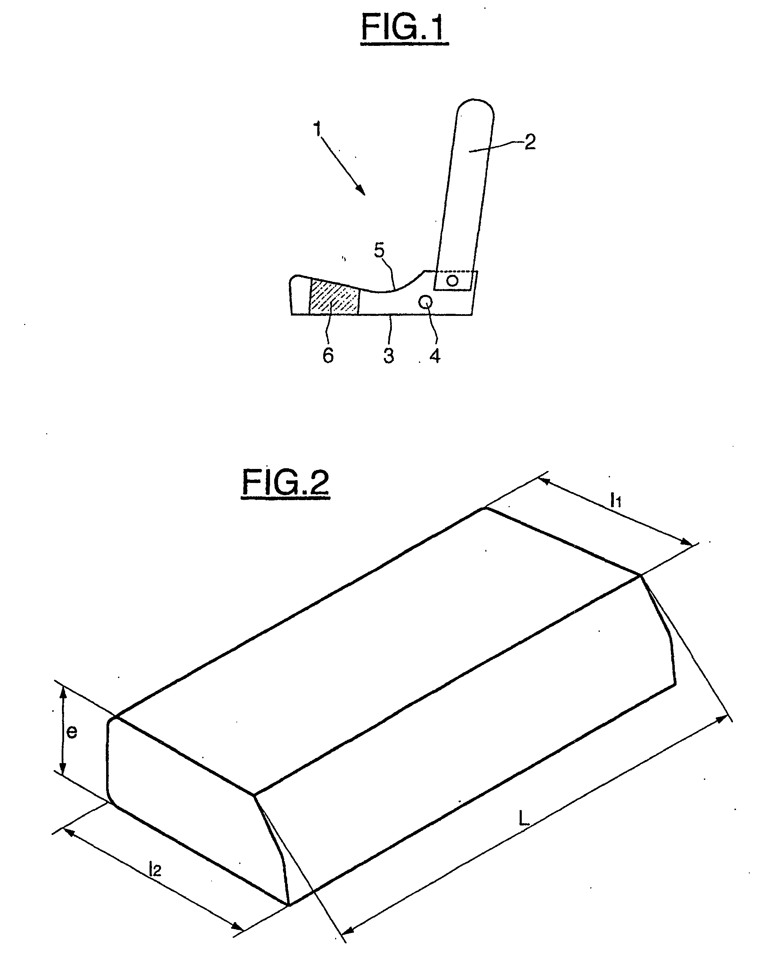

On a représenté sur la figure 1 un siège de véhicule automobile 1 selon l'invention qui comporte, comme cela est classique, un dossier 2 articulé sur une assise 3. L'assise 3 est généralement constituée d'une armature 4 et d'un coussin 5.

Selon l'invention, un élément en mousse d'aluminium 6 est disposé dans une partie, généralement une partie avant, de l'assise 3 du siège, pour constituer la partie de contrôle de décélération du bassin de l'occupant en cas de choc du véhicule, en particulier frontal.

Comme indiqué précédemment, cet élément en mousse d'aluminium peut faire partie intégrante de l'armature 4 du siège ou être un élément rapporté enfoui à l'endroit voulu dans le coussin 5 du siège.

On a représenté, figure 2, un élément en mousse d'aluminium selon la présente invention, sous la forme d'un élément rapporté destiné à être enfoui dans le coussin du siège.

Comme le montre la figure 2, cet élément rapporté a une forme générale parallélépipédique dont les dimensions sont choisies de manière à assurer un effet effectif de contrôle de la décélération du bassin de l'occupant en cas de choc. En particulier, l'élément a une longueur L et une largeur maximale 12 suffisantes pour que la totalité du bassin de l'occupant repose au-dessus de l'élément. Ainsi, l'élément peut avoir une longueur L d'environ 400 mm ou plus, une largeur l₂ de sa face inférieure de 180 à 300 mm et une largeur l₁ de sa face supérieure de 150 à 200 mm. En outre, l'épaisseur e de l'élément doit être suffisante pour absorber l'énergie appliquée lors d'un choc, et est généralement comprise entre 50 et 100 mm, de préférence entre 80 et 100 mm.

Pour mettre en évidence l'efficacité des éléments en mousse d'aluminium selon l'invention, on a réalisé des essais de compression quasi statiques sur différents blocs de mousse d'aluminium de densité comprise entre 0,10 et 0,40 en utilisant une machine d'essai ROELL et KORTHAUS de capacité 50 kN et un impacteur constitué d'une demi-sphère de diamètre 100 mm. Les compressions ont été effectuées à la vitesse de 20 mm/min.

D'autre part, on a fixé les critères suivants :
Effort : 10 kN à ne pas dépasser
6 kN dans l'axe de la colonne vertébrale
4 kN à 20 mm du mouvement de la colonne vertébrale
Energie : 180 à 220 Joules.

Les éléments en mousse d'aluminium testés étaient des blocs d'épaisseur 50 mm et 90-100 mm.

Les mousses d'aluminium utilisées étaient :

**Pour les blocs de 90-100 mm :**
ALCAN 0,15 : nuance AA 359 + SiC, de densité 0,15 de la Société ALCAN,
HYDRO 0,20 : nuance AlSi₉Cu₃ + SiC de densité 0,20 de la Société HYDROALUMINIUM,
HYDRO Mg 0,20 : nuance AlSi₁₀Mg + SiC de densité 0,20 de la Société HYDROALUMINIUM.

**Bloc de 50 mm d'épaisseur :**
ALCAN 0,15 : nuance AA 359 + SiC de densité 0,15 de la Société ALCAN,
HYDRO Cu 0,20 : nuance AlSi₉Cu₃ + SiC de densité 0,20 de la Société HYDROALUMINIUM.
HYDRO Mg : nuance AlSi₁₀Mg + SiC de densité 0,20 de la Société HYDROALUMINIUM.
ALCAN 0,28 : nuance AA 359 + SiC de densité 0,28 de la Société ALCAN.
ALCAN 0,10 : nuance AA 359 + SiC de densité 0,10 de la Société ALCAN.

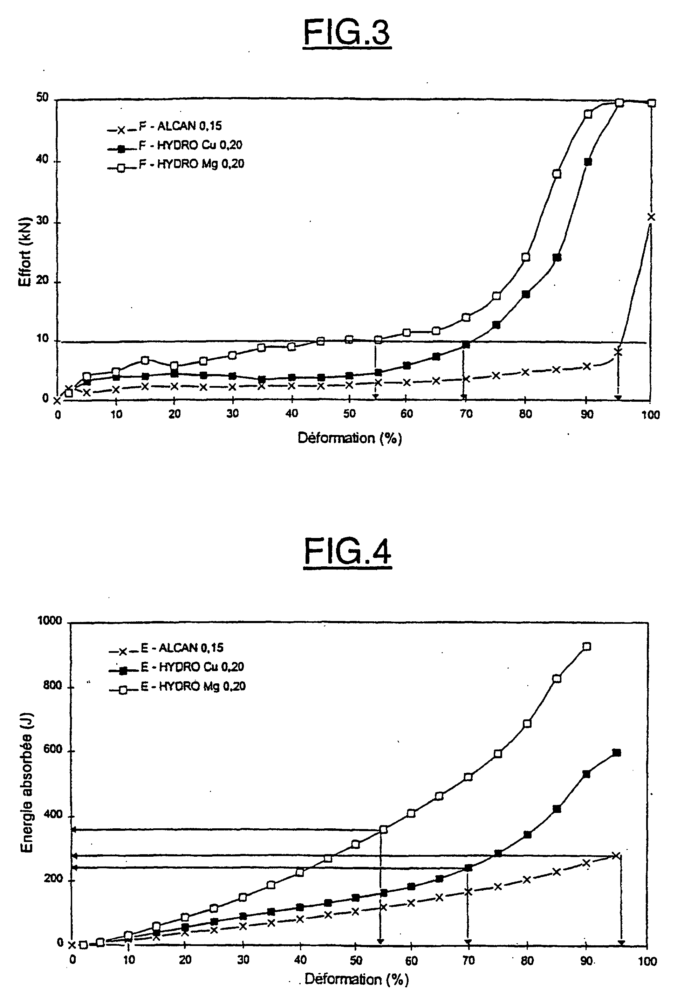

Les figures 3 et 4 montrent la relation entre l'effort et la déformation des blocs en mousse d'aluminium d'épaisseur 90-100 mm, cependant que la figure 4 est un graphe de l'énergie absorbée en fonction de la déformation pour ces mêmes blocs. Ces figures montrent que pour les trois matériaux testés, l'énergie absorbée évolue entre 200 et 380 Joules, le taux de compression variant alors de 95 à 55%.

Ainsi, si on fixe l'effort maximum à 10 kN, les blocs permettent de répondre aux critères imposés.

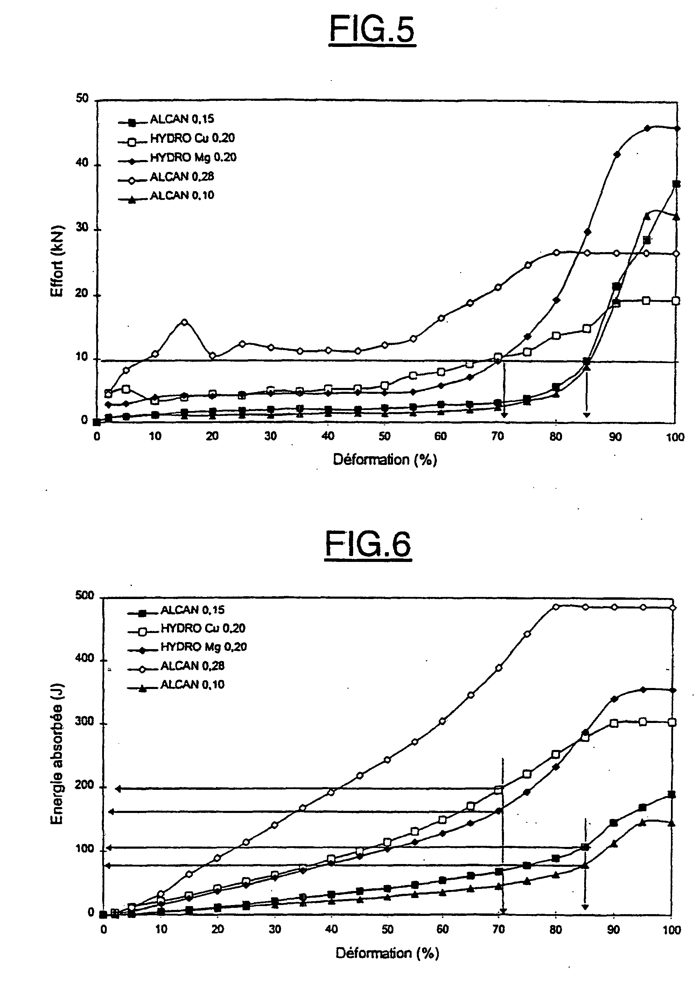

Les figures 5. et 6 sont les graphes de l'effort et de l'énergie absorbée en fonction de la déformation pour les blocs de 50 mm d'épaisseur.

On peut voir, en particulier, dans le cas des blocs de faible épaisseur, et pour les mousses de faible densité inférieure ou égale à 0,20, qu'on peut maintenir l'effort en dessous de 10 kN avec un taux de déformation élevé (de 70 à 85%). La longueur d'écrasement disponible étant moins importante que dans le cas des blocs de grande épaisseur, l'énergie absorbée est bien évidemment réduite en comparaison aux essais réalisés avec les blocs de plus grande épaisseur.

Toutefois, dans tous les cas, on retrouve une stabilité de l'effort d'écrasement pendant la compression.

## Revendications

1. Siège pour véhicule automobile, comprenant une assise (3) et un dossier (2), ladite assise (3) comportant une partie de contrôle de la décélération du bassin d'une personne assise sur le siège, **caractérisé en ce que** la partie de contrôle de la décélération est constituée d'un élément en mousse d'aluminium (6).

2. Siège selon la revendication 1, **caractérisé en ce que** la partie de contrôle de la décélération est sous la forme d'un élément rapporté.

3. Siège selon la revendication 1, **caractérisé en ce que** la partie de contrôle de la décélération est formée intégralement avec l'assise du siège.

4. Siège selon l'une quelconque des revendications 1 à 3, **caractérisé en ce que** la mousse d'aluminium a une densité de 0,10 à 0,40, de préférence 0,15 à 0,20.

5. Siège selon l'une quelconque des revendications 1 à 4, **caractérisé en ce que** la partie de contrôle de la décélération présente un effort stabilisé inférieur à 10 kN pour un taux de déformation compris entre 50 et 95%, de préférence 55 à 95%.

6. Siège selon la revendication 5, **caractérisé en ce que** le taux de déformation est compris entre 70 et 85%.

7. Siège selon l'une quelconque des revendications 1 à 6, **caractérisé en ce qu'**il est équipé d'une ceinture de sécurité.

8. Utilisation d'un élément en mousse d'aluminium pour réaliser dans l'assise d'un siège de véhicule automobile une partie de contrôle de la décélération du bassin d'une personne assise sur le siège, **caractérisé en ce que** l'élément de mousse d'aluminium a une densité comprise entre 0,10 et 0,40, de préférence 0,15 à 0,20.

## Patentansprüche

1. Sitz für ein Kraftfahrzeug, aufweisend ein Sitzteil (3) und eine Sitzlehne (2), wobei das Sitzteil (3) ein Teil zur Steuerung der Verzögerung des Beckens einer Person aufweist, welche auf dem Sitz sitzt, **dadurch gekennzeichnet, dass** das Teil zur Steuerung der Verzögerung aus einem Element aus Aluminiumschaum (6) gebildet ist.

2. Sitz nach Anspruch 1, **dadurch gekennzeichnet, dass** das Teil zur Steuerung der Verzögerung die Form eines angefügten Elements aufweist.

3. Sitz nach Anspruch 1, **dadurch gekennzeichnet, dass** das Teil zur Steuerung der Verzögerung integral mit dem Sitzteil des Sitzes ausgebildet ist.

4. Sitz nach irgendeinem der Ansprüche 1 bis 3, **dadurch gekennzeichnet, dass** der Aluminiumschaum eine Dichte von 0,10 bis 0,40 aufweist, vorzugsweise 0,15 bis 0,20.

5. Sitz nach irgendeinem der Ansprüche 1 bis 4, **dadurch gekennzeichnet, dass** das Teil zur Steuerung der Verzögerung eine stabilisierte Kraft geringer als 10 kN für einen Verformungsgrad zwischen 50 und 95%, vorzugsweise zwischen 55 und 95%, aufweist.

6. Sitz nach Anspruch 5, **dadurch gekennzeichnet, dass** der Verformungsgrad zwischen 70 und 85% liegt.

7. Sitz nach irgendeinem der Ansprüche 1 bis 6, **dadurch gekennzeichnet, dass** er mit einem Sicherheitsgurt ausgestattet ist.

8. Verwendung eines Elementes aus Aluminiumschaum, um in einem Sitzteil eines Sitzes eines Kraftfahrzeugs ein Teil zur Steuerung der Verzögerung des Beckens einer Person, welche auf dem Sitz sitzt, zu realisieren, **dadurch gekennzeichnet, dass** das Element aus Aluminiumschaum eine Dichte zwischen 0,10 und 0,40, vorzugsweise zwischen 0,15 und 0,20, aufweist.

## Claims

1. Motor vehicle seat, comprising a base (3) and a back (2), the aforementioned base (3) comprising a section to control the deceleration of the pelvis of a person sitting in the seat, **characterised in that** the section to control the deceleration is made up of an aluminium foam component (6).

2. Seat according to claim 1, **characterised in that** the section to control the deceleration is in the form of an add-on component.

3. Seat according to claim 1, **characterised in that** the section to control the deceleration is formed as an integral part of the base of the seat.

4. Seat according to any one of claims 1 to 3, **characterised in that** the aluminium foam has a density of 0.10 to 0.40, and preferably 0.15 to 0.20.

5. Seat according to any one of claims 1 to 4, **characterised in that** the section to control the deceleration has a stabilised stress of less than 10 kN for a deformation ratio of between 50 and 95%, and preferably 55 to 95%.

6. Seat according to claim 5, **characterised in that** the deformation ratio is between 70 and 85%.

7. Seat according to any one of claims 1 to 6, **characterised in that** it is fitted with a seat belt.

8. Use of an aluminium foam component to produce, in the base of a motor vehicle seat, a section to control the deceleration of the pelvis of a person sitting in the seat, **characterised in that** the aluminium foam component has a density of between 0.10 and 0.40, and preferably 0.15 to 0.20.
